# EUROPEAN PATENT APPLICATION

(11) **EP 1 747 712 A1**
(43) Date of publication of application: **31.01.2007**
(21) Application number: 05425547.6
(22) Date of filing: 26.07.2005
(51) Int. Cl.: A01G 3/037, B26B 15/00

(54) **Mechanized pruning device**

(71) Applicant: Cecchi, Daniela, 71100 Foggia (IT); Cecchi, Marco, 71100 Foggia (IT); Cecchi, Sabrina, 71100 Foggia FG (IT)
(72) Inventor: Cecchi, Daniela, 71100 Foggia (IT); Cecchi, Marco, 71100 Foggia (IT); Cecchi, Sabrina, 71100 Foggia FG (IT)
(74) Representative: Leone, Mario

(57) **Abstract**

A device for mechanized pruning and the like, comprising a cutting unit (1) having a first blade (2) and a second blade (4) in rotation therebetween, suitably for continually carrying out successive cutting cycles; actuation means for actuating said cutting unit, comprising a motor (200); a feeler (7), hinged at said blades (2,4) so as to assume a position median to the space between said first and second blade (2,4), said feeler (7) being suitable for intercepting a body (80) to be cut off; and a lever (8), integral to said feeler (7) and hinged thereat, suitable for obtaining a consent to the starting of said motor (200); wherein said feeler (7), by intercepting said body (80) to be cut off, undergoes a displacement that induces a corresponding displacement of said lever (8), so that said lever contacts a first switch (50) of a circuit for powering said motor (200) determining its closing.

## Description

The present invention relates to a mechanized pruning device, in particular intended for pruning branches, tendrils, bushes, etc., therefore to be used mainly in agriculture and/or for gardening. Hence, the device according to the present invention finds useful employ in the manufacturing of machines intended for the agricultural field, e.g. for olive-, wine-, fruit-growing; and for the nursery and the forestry fields.

Pruning, or anyhow tending to plants requiring the cutting of branches, is usually carried out with the use of shears or scissors.

The present invention is associable to the production of scissors, shears and branch cutters, indifferently of a pneumatic, electric or hydraulic type.

Devices like pruning scissors, shears and branch cutters have cutting units based on a lever system, providing two blades; generally, yet not exclusively, one of the blades is stationary or abutting and the other one is movable.

Generally, the movable blade has a fulcrum of rotation located on the stationary blade and an extension beyond the fulcrum constituting the arm of the lever onto which the thrust force generated by an actuator system acts. The maximum opening angle of the blades may be variable according to the needs to be met in any case.

To date, no control system ensures the actuation of the blades of the cutting unit exclusively when the cutting off of a branch or the like comprised therebetween is required. Generally, the actuation systems are selectively started by a user through a control, e.g. a pushbutton.

Therefore, in known machines it is not uncommon for the cutting to fail, e.g., since the pushbutton has inadvertently been pressed, or not to result in the actual cutting off of a branch. Such an occurrence is also a possible hazard for the user, who risks to inadvertently start the machine when it is still not suitably positioned and preset for the cutting of the desired body.

In the light of the speed at which the mechanized blades move and of their relentlessness in performing the cutting, for the user's safety it is important that the cutting unit operates solely when the presence of a branch between the blades is actually detected.

The safety systems used in the state of the art do not suffice and merely provide a partial protection, ceasing when they have to be deactivated to perform a job.

On the other hand, a user cannot totally rely on the adoption of individual protective devices, like safety gloves, and of standardized working procedures.

Hence, there is the demand for a control system of a device for mechanized pruning and branch-cutting allowing to overcome said drawbacks, mentioned with reference to the state of the art.

This demand is met by a mechanized pruning device as defined in claim 1, suitable for incorporating a feeler for the preventive detection of the presence between the blades of a body to be cut off.

A device according to the present invention enhances a user's safety of use of a mechanized pruning device, as it provides the operation of the motor in charge of the moving of the cutting unit only when actually required.

The feeler, which can be incorporated as control system of a mechanized pruning device according to the present invention, is of no hindrance whatsoever to the insertion of a branch between the blades and the pruning.

In addition, a further object of the device according to the present invention consists in advantageously alternating, with a perfect synchronism, the useful step of cutting with that of opening the blades and preparing a new cutting, preventing cumbersome discontinuities from occurring in the performing of a full cutting cycle.

Likewise, the technical solutions adopted, in preferred embodiments, to attain such a synchronization in the alternation of the cutting and opening steps enable to adjust the blade opening width on the basis of the assessed size of the item to be cut off.

Further advantages, as well as the features and the operation modes of the present invention will be made apparent in the following detailed description of a preferred embodiment thereof, given by way of a non-limiting example and making reference to the figures of the annexed drawings, wherein:
* figure 1-A is a front view of a cutting unit of a preferred embodiment of the device according to the present invention, in which, in particular, there are depicted the components of the cutting unit, illustrated in a first non-operating condition of the device;
* figure 1-B is a front view of the cutting unit of figure 1-A, in a second operating condition of the device according to the present invention;
* figure 2 is a front view of the cutting unit of figure 1, when the device according to the present invention lies in a third non-operating condition;
* figure 3 is a schematic depiction, apt to illustrate the operation mechanism of actuation means of the preferred embodiment of the device according to the present invention introduced in figure 1-A;

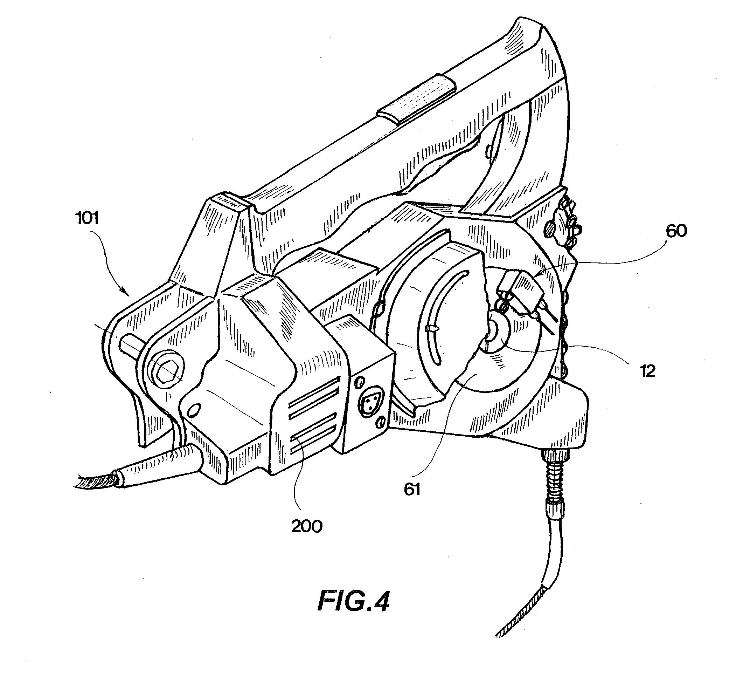

* figure 4 is a perspective view of the power unit of the device according to the embodiment introduced in figure 1-A; and

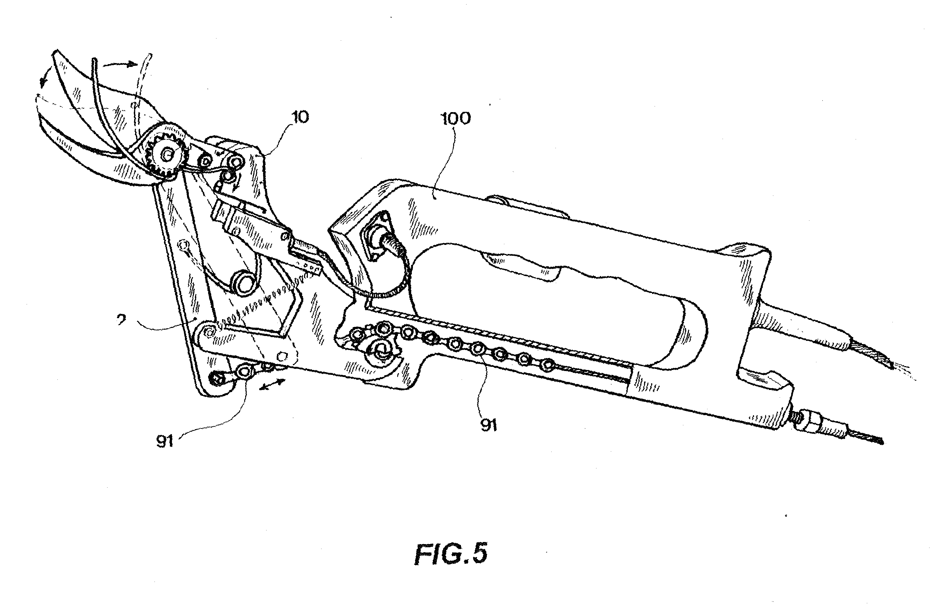

* figure 5 is a perspective view of a cutting unit and a handgrip of the device according to the embodiment introduced in figure 1-A.

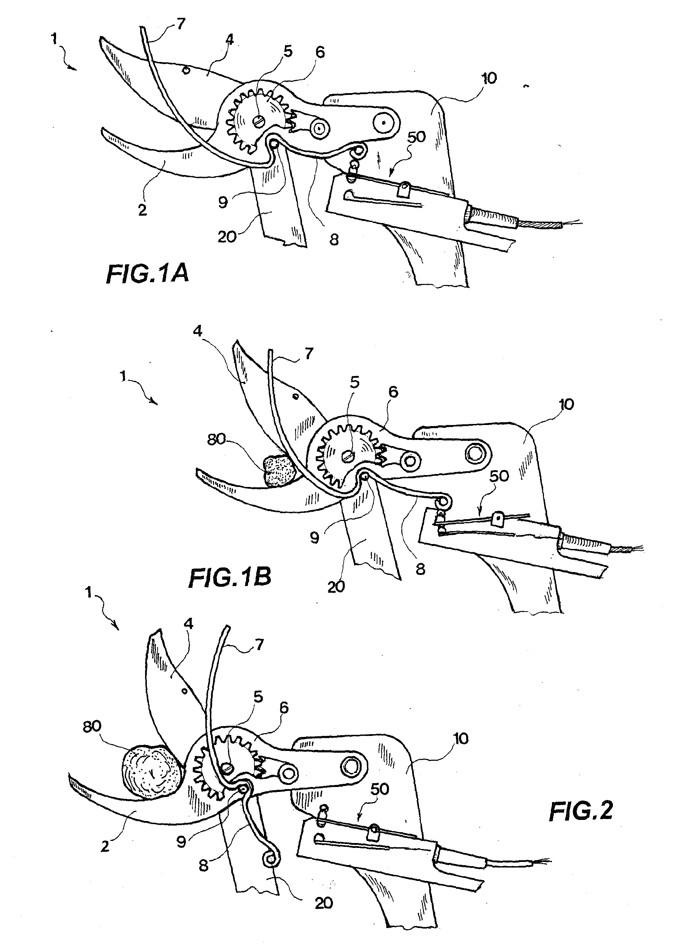

Initially referring to figures 1-A and 1-B, a device for mechanized pruning and the like according to the present invention comprises a cutting unit 1 having a first blade 2 and a second blade 4 in rotation therebetween, suitable for continually carrying out successive cutting cycles.

With regard to the preferred embodiment of the device according to the present invention illustrated herein, said second blade 4 is movable and it closes in abutment onto the first blade 2, which instead is kept stationary, e.g. by being made integral to the power unit 101 of the device or to the handgrip 100 of the cutting unit 1.

In particular, the second blade 4 can be pivotally connected to the first blade 2 through a pin 5.

An adjustment member 6, e.g. screwed down on the pin 5, prevents the formation of excessive side clearances between the pair of blades, anyhow ensuring their related cutting motion.

Each of said cutting cycles is composed of a first step of closing of the second movable blade 4 onto the stationary first blade 2, ending with the cutting of the body to be cut off; and of a second step of opening of the movable blade 4 with respect to the stationary blade 2, aimed at allowing the insertion of the body 80 intended to be cut off between the blades.

The device according to the present invention comprises actuation means for actuating said cutting unit 1, comprising a motor 200.

In the present embodiment it is provided a rotary motor 200, in particular an electric motor. Transmission means for transmitting the motion developed by the motor 200 is connected to the movable blade 4.

In particular, said transmission means comprises a gear mechanism or gearing 90, wherein at least one gear 300 is appointed to collect the motion given by the motor 200, said gear being, e.g., dragged in rotation by a pinion 70 integral to the rotating portion of said motor 200.

The transmission means also comprises a leverage comprising a first arm 10, integral to the power unit 101 or to the handgrip 100 of the cutting unit 1; and a second arm 20 integral to the movable blade 4.

The gear mechanism 90 cedes the motion given by the motor 200 to the actuation means with transmission modes such as to give a reciprocating motion to the latter, e.g., by cooperating with a transmission sprocket 71.

The reciprocating actuation means, median to the gear mechanism and to the cutting unit 1, is connected to said second arm 20 integral to the blade 4. The configuration is such that such a gear 300 makes a full revolution for each cutting cycle.

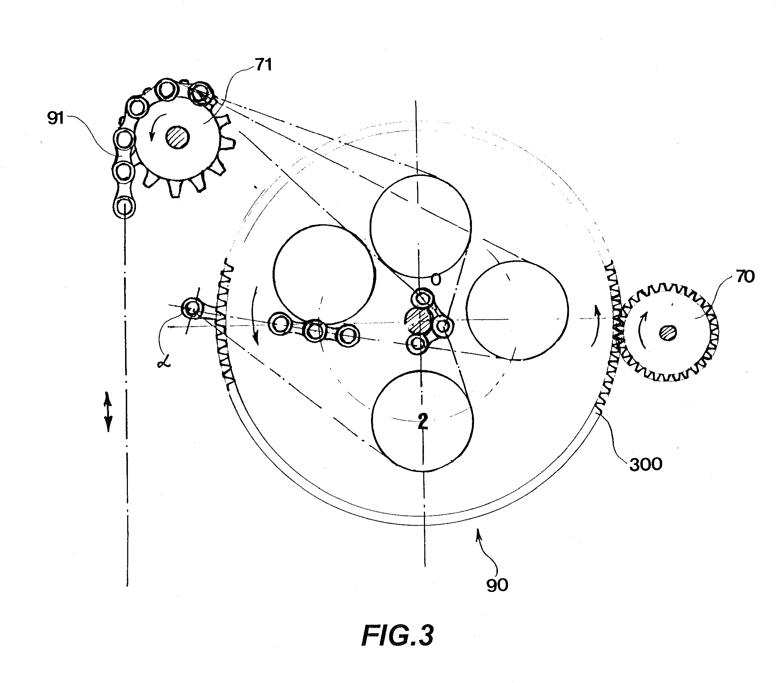

A gear mechanism 90 as above-introduced can take the shape of a planetary gearing as depicted in figure 3, whereas the function of the reciprocating actuation means may be carried out by transmission members such as chains 91, suitable for meshing with the gears of said gearing, and/or with cables.

Referring to figures 3 and 1-A - 2, in the case of the described embodiment said transmission members have a first end α fixed to the power unit 101 of the device according to the present invention, i.e. to the shielding carter; and a second end β connected to the second arm 20.

The planetary gearing depicted in figure 3 is suitable for cyclically engaging variable sections of a chain 91, fixed, at a first end α thereof, to the carter of the device and, at a second end β thereof, to the arm 20, so as to give it a reciprocating motion for carrying out said successive cutting cycles.

As it may be inferred from figures 1A-2, the cutting unit 1 of a device according to the present invention comprises a feeler 7, hinged at said blades 2, 4, suitable for intercepting a body 80 to be cut off.

Such a feeler 7 is mounted so as to assume a position median to the space between the first blade 2 and the second blade 4.

A lever 8, integral to said feeler 7 and hinged thereat, is suitable for obtaining a consent to the starting of said motor.

With regard to the embodiment described here, the feeler 7 and the lever 8 are two arms of a single elongate body, opposite with respect to a rotation pin 9 on which said elongate body is fulcrumed.

At the cutting unit 1 it is mounted a first switch 50 of a circuit for powering the motor 200.

In the non-operating condition of the device according to the present invention, exemplified in figure 1-A, the switch 50 is opened and the motor 200 is not powered.

In figure 1-B, corresponding to an operating condition of the device according to the present invention, it is illustrated a closed configuration of the switch 50 resulting from the pressure exerted by the lever 8.

In particular, it may be inferred how when the feeler 7 intercepts a body 80 to be cut off, e.g. a branch, it undergoes a displacement due to the pressure exerted by the latter.

Said displacement of the feeler 7 induces a corresponding displacement of the lever 8, so that the lever 8 contacts the switch 50 determining its closing.

The rotation of the feeler 7, and the entailed rotation of the lever 8, is proportional to the transversal dimensions of the body 80 to be cut off according to the cutting line of the blades 2,4.

In figure 2 it is illustrated the case in which the transversal dimensions of the body 80 to be cut off are such as to exceed the maximum opening structurally allowed to the pair of blades 2, 4.

In such an occurrence, the lever 8 disengages from the switch 50 with which it has come into contact, determining the opening of said first circuit and, according to a fail-safe operation principle, assumes a non-operating position in which it is prevented from contacting again the switch 50 without a prior intervention by the user.

Thus, the cutting is assured solely upon actual insertion of a body 80 in an useful cutting position between the blades 2, 4.

Moreover, it is prevented a breaking of the device according to the present invention in case of an undersizing thereof with respect to the items 80 to be cut.

Moreover, it is provided a contact element 12 integral to the gear 300, suitable for taking over from the lever 8 for obtaining a consent to the starting of the motor 200, at the total or partial closing of the blades and during the blade opening step.

The presence of such a contact element assures continuity of cutting cycle even upon completion of the cutting, concomitantly to which the pressure exerted onto the feeler by the body 80 to be cut ceases, with the entailed potential risk of shutdown of the motor 200.

The blades 2, 4 would thereby remain in a tightly closed configuration without allowing to engage other branches 80, with the entailed waste of working time.

Such a shutdown would prove exceedingly cumbersome when pruning, e.g., hedges and fruit trees having a close plurality of branches to be cut off.

In this situation, a user wishes to always have the blades preset for a novel cutting, thereby optimizing the work pace, without unproductive pauses and without restoring the opened configuration of the blades.

For this purpose, the device according to the present invention comprises a second switch 60, set substantially in parallel with the first switch 50 and positioned near the gear 300.

The switch 60, when it is contacted by the contact element 12, makes the circuit for powering the motor 200.

Such a contact is set astride the step of total or partial closing of the blades and the subsequent opening step.

In order to attain the desired effect, the contact element 12 comes into contact with the switch 60, closing it, before the cutting is completed and the blades tightly closed the one onto the other.

With regard to the described embodiment, the contact element 12 is substantially cam-shaped and its contour determines the actuation interval thereof between the step of total or partial closing of the blades and the subsequent opening step thereof.

The contact element 12 is adjustable so as to determine the width of the space between the blades 2, 4 during the second opening step.

In particular, said width is defined depending on the time of permanence in a closed condition of the second switch 60, in the blade opening step.

The contact element 12, hinged to the gear 300, is adjustable by a user, e.g. through adjustment means located onto the carter of the device, thereby yielding a set width of the arc of contact with the switch 60, starting from the point of contact corresponding to the totally and tightly closed position of the blades.

Preferably, the width of the span of the second movable blade 4 with respect to the first abutment blade 2, thus determined by the contact element 12, is substantially equivalent to the assessed transversal dimensions of the body to be cut off.

Thus, the blade opening width, preset by the user, will depend on the thickness of the body 80 to be cut off, in order to allow the ready insertion of the latter between the blades.

In the case at issue, the configuration of the transmission means is such that, at the opening angle set for the blades 2,4, a minimal portion of the reciprocating actuation means, e.g., of the sections of transmission chain 91 is engaged by said gearing 90; instead, at the tightly closed position of said blades, upon ending the cutting, a maximal portion of the reciprocating actuation means is engaged.

An opposing spring 30, suitable for resisting the closing of the second movable blade 4 onto the first abutment blade 2, has a first end integral to the power unit of the device and a second end integral to the arm 20 of the leverage.

When the feeler 7 detects the presence of a body to be cut off, the motor 200 is operated.

Initially, the pull of the chain 91 onto the arm 20 decreases, until the force of the opposing spring 30 prevails over said pull.

When this occurs, the blades 2, 4, which from the preceding cutting cycle remained open according to the user's adjustment settings, totally open up, to the maximum structurally allowed degree of opening.

With the progress of the cutting cycle and the corresponding rotation of the gear 300, the section of chain 91 engaged by the gearing 90 increases anew and the pull of the chain 91 onto the arm 20 undergoes a proportional increase.

Accordingly, the blades 2, 4 begin to close and little by little the cutting of the body 80 to be cut off is performed.

Before the end of the cutting, and before the blades 2, 4 lie in the totally closed position, the closing of the switch 60 is set by the contact element 12.

Upon having performed the cutting, the chain 91 is progressively released; the pull onto the arm 20 decreases, and the blades 2, 4, by virtue of the force exerted by the opposing spring 30, open again for a width equal to that set by the user through the adjustment performed onto the contact element 12.

The present invention has hereto been described according to a preferred embodiment thereof, given by way of example and not for limitative purposes.

It is understood that other embodiments could be envisaged, all to be construed as falling within the protective scope thereof, as defined by the annexed claims.

## Claims

1. A device for mechanized pruning and the like, comprising:
- a cutting unit (1) having a first blade (2) and a second blade (4) in rotation therebetween, suitable for continually carrying out successive cutting cycles;
- actuation means for actuating said cutting unit, comprising a motor (200);
- a feeler (7), hinged at said blades (2,4) so as to assume a position median to the space between said first and second blade (2,4), said feeler (7) being suitable for intercepting a body (80) to be cut off; and
- a lever (8), integral to said feeler (7) and hinged thereat, suitable for obtaining a consent to the starting of said motor (200),
wherein said feeler (7), by intercepting said body (80) to be cut off, undergoes a displacement that induces a corresponding displacement of said lever (8), so that said lever contacts a switch (50) of a circuit for powering said motor (200) determining its closing.

2. The device (1) according to claim 1, wherein said pair of blades (2,4) comprises a first stationary blade (2), integral to the power unit (101) of said device; and a second movable blade (4) hinged to said first blade (2).

3. The device (1) according to claim 2, wherein to said second blade (4) it is connected transmission means for transmitting the motion developed by said motor.

4. The device according to one of the claims 1 to 3, wherein said displacement of said feeler (7) is proportional to the transversal dimensions of said body (80) to be cut off according to the cutting line of said blades (2,4).

5. The device according to claim 4, wherein when said dimensions of said body (80) to be cut off exceed a given measure corresponding to the maximum opening of said blades (2,4), said lever (8) disengages from said switch (50) determining the opening of said first circuit, and it assumes a non-operating position in which it is prevented from contacting said first switch (50).

6. The device (1) according to claim 1, wherein said transmission means for transmitting said motion comprises:
- a leverage comprising a first arm (10) integral to the power unit (101) of said device and a second arm (20) integral to said second movable blade (4);
- reciprocating actuation means connected to said second arm (20);
- a gear (300) suitable for collecting the motion given by a motor (200) so as to give a reciprocating motion to said actuation means (91),
wherein said gear (300) makes a full revolution for each cutting cycle, said cutting cycle being composed of a first step of closing the second movable blade (4) onto said first abutment blade (2) for the cutting off of said body (80); and of a second step of opening of said second movable blade (4) with respect to said first abutment blade (2) for allowing the insertion of said body (80) between the blades, there being provided a contact element (12) integral to said gear (300), suitable for taking over from said lever (8) for the obtainment of a consent to the starting of said motor (200) at the total or partial closing of said blades (2,4) and during said second opening step.

7. The device according to claim 6, comprising a second switch (60), set substantially in parallel with said first switch (50), suitable for taking over from said first switch (50) for the making of said circuit for powering said motor (200) when it is contacted by said contact element (12).

8. The device according to one of the claims 6 or 7, wherein said contact element (12) is adjustable so as to determine the width of the space between said blades (2,4) during said second opening step.

9. The device according to one of the claims 6 to 8, wherein said contact element (12) is substantially cam-shaped.
